# EUROPEAN PATENT APPLICATION

(11) **EP 4 815 088 A1**
(43) Date of publication of application: **30.09.2026**
(21) Application number: 25905661.2
(22) Date of filing: 07.11.2025
(51) Int. Cl.: H01M 10/0525, H01M 10/058, H01M 4/131, H01M 4/525, H01M 4/505, H01M 4/58, H01M 4/62, H01M 10/42

(54) **SECONDARY BATTERY AND ELECTRIC DEVICE**

(30) Priority: 02.01.2025 CN 202510012313
(71) Applicant: Sunwoda Mobility Energy Technology Co., Ltd., Shenzhen, Guangdong 518107 (CN)
(72) Inventor: LIANG, Ziteng, Shenzhen, Guangdong 518107 (CN)
(74) Representative: Metida
(86) International application number: PCT/CN2025/133288
(87) International publication number: WO 2026/144545

(57) **Abstract**

The present disclosure discloses a secondary battery and an electrical device. In the present disclosure, a first positive electrode active material layer and a second positive electrode active material layer are sequentially disposed on at least one surface of a positive electrode current collector, and a first additive (Liₓ₁Fe_{1-y1}M1_{y1}Cl_{4-z1}Se_{z1}) and a second additive (Liₓ₂Fe_{1-y2}M2_{y2}Cl_{4-z2}Se_{z2}) are added to the first positive electrode active material layer and the second positive electrode active material layer, respectively. By controlling ranges of y1, z1, y2, and z2 in the first additive and the second additive, the first positive electrode active material layer close to the positive electrode current collector possesses a high electronic conductivity, and the second positive electrode active material layer away from the positive electrode current collector possesses a high ionic conductivity, which facilitates the transport of electrons and ions, and effectively improves the rate performance and cycling performance of the secondary battery.

## Description

### CROSS-REFERENCE TO RELATED APPLICATION

This application claims priority to Chinese Patent Application No. 202510012313.7, filed on January 2, 2025, which is incorporated herein by reference in its entirety.

### TECHNICAL FIELD

The present disclosure relates to the technical field of batteries, and in particular to a secondary battery and an electrical device.

### BACKGROUND

Lithium-ion batteries have been widely used in 3C digital products, electric vehicles, and energy storage power stations. However, safety performance of current lithium-ion batteries still needs improvement.

Replacing a flammable liquid electrolyte in a conventional lithium-ion battery with a nonflammable solid-state electrolyte yields a battery known as an all-solid-state battery. All-solid-state batteries can effectively improve the safety performance of secondary batteries. The rate performance of existing all-solid-state batteries still requires improvement.

In view of this, the present disclosure is proposed.

### SUMMARY

An objective of the present disclosure is to overcome deficiencies of the existing technologies and to provide a secondary battery and an electrical device, and the secondary battery possesses excellent rate performance and cycling performance.

To achieve the above objective, in a first aspect of the present disclosure, provided is a secondary battery, including a positive electrode plate, where the positive electrode plate includes a positive electrode current collector, as well as a first positive electrode active material layer and a second positive electrode active material layer sequentially disposed on at least one surface of the positive electrode current collector, the first positive electrode active material layer includes a first additive, and the second positive electrode active material layer includes a second additive,
the first additive includes a compound represented by a general formula Liₓ₁Fe_{1-y1}M1_{y1}Cl_{4-z1}Se_{z1}, where 0 < x1 < 2.5, 0 < y1 < 0.3, 0.3 ≤ z1 < 0.5, and M1 includes at least one selected from the group consisting of Sc, B, Al, Ga, In, Zr, Si, Ge, Sn, V, Nb, Ta, Mo, and W, and
the second additive includes a compound represented by a general formula Liₓ₂Fe_{1-y2}M2_{y2}Cl_{4-z2}Se_{z2}, where 0 < x2 < 2.5, 0.3 ≤ y2 < 0.5, 0 < z2 < 0.3, and M2 includes at least one selected from the group consisting of Sc, B, Al, Ga, In, Zr, Si, Ge, Sn, V, Nb, Ta, Mo, and W.

As an embodiment of the present disclosure, at least one of the following (1) to (4) is satisfied:
$0.2 \leq y 1 < 0.3 ,$
$0.3 \leq z 1 \leq 0.4 ,$
$0.3 \leq y 2 \leq 0.4 ,$
$0.2 \leq z 2 < 0.3 .$

As an embodiment of the present disclosure, the M1 includes at least one selected from the group consisting of Sc, Al, Zr, Si, Nb, Ta, and W, and/or
the M2 includes at least one selected from the group consisting of Sc, Al, Zr, Si, Nb, Ta, and W.

As an embodiment of the present disclosure, an average particle size of the first additive is A1, an average particle size of the second additive is A2, and A1 < A2.

As an embodiment of the present disclosure, 300 nm ≤ A1 ≤ 500 nm, and/or 500 nm ≤ A2 ≤ 800 nm.

As an embodiment of the present disclosure, a mass percentage of the first additive in the first positive electrode active material layer is B1, a mass percentage of the second additive in the second positive electrode active material layer is B2, and B2 < B1.

As an embodiment of the present disclosure, 20% ≤ B1 ≤ 24%, and/or 13% ≤ B2 ≤ 20%.

As an embodiment of the present disclosure, a thickness of the first positive electrode active material layer is in a range of from 80 µm to 100 µm, and/or
a thickness of the second positive electrode active material layer is in a range of from 80 µm to 100 µm.

As an embodiment of the present disclosure, the first positive electrode active material layer includes a first positive electrode active material, and the first positive electrode active material includes at least one selected from the group consisting of lithium cobalt oxide and lithium nickel cobalt manganese oxide, and/or
the second positive electrode active material layer includes a second positive electrode active material, and the second positive electrode active material includes at least one selected from the group consisting of lithium cobalt oxide and lithium nickel cobalt manganese oxide.

In a second aspect of the present disclosure, provided is an electrical device, including the secondary battery described above, and the secondary battery serves as a power supply for the electrical device.

The present disclosure has the following beneficial effects. In the present disclosure, a first positive electrode active material layer and a second positive electrode active material layer are sequentially disposed on at least one surface of a positive electrode current collector, and a first additive (Liₓ₁Fe_{1-y1}M1_{y1}Cl_{4-z1}Se_{z1}) and a second additive (Liₓ₂Fe_{1-y2}M2_{y2}Cl_{4-z2}Se_{z2}) are added to the first positive electrode active material layer and the second positive electrode active material layer, respectively. By controlling the ranges of y1, z1, y2, and z2 in the first additive and the second additive, the first positive electrode active material layer close to the positive electrode current collector possesses a high electronic conductivity, and the second positive electrode active material layer away from the positive electrode current collector possesses a high ionic conductivity, which facilitates the transport of electrons and ions, and improves the ion and electron transport efficiency of the positive electrode plate. Meanwhile, the first additive and the second additive can serve as active materials, increasing the proportion of active materials in the first positive electrode active material layer and the second positive electrode active material layer, improving the conductivity and stability of the interface between the second positive electrode active material layer and the solid-state electrolyte, reducing the interface impedance therebetween, avoiding phenomena such as interface deterioration during cycling, and effectively improving the rate performance and cycling performance of the secondary battery.

### DETAILED DESCRIPTION

In order to make the objectives, technical solutions, and advantages of the embodiments of the present disclosure clearer, the technical solutions in the embodiments of the present disclosure will be clearly and completely described below. Apparently, the described embodiments are part of the embodiments of the present disclosure, not all of them. Based on the embodiments of the present disclosure, all other embodiments obtained by a person of ordinary skill in the art without making creative efforts fall within the protection scope of the present disclosure.

In the present disclosure, technical features described in an open-ended manner include both closed technical solutions consisting of the listed features and open technical solutions including the listed features.

In the present disclosure, numerical intervals, unless otherwise specified, are considered continuous, and include the minimum and maximum values of the interval, as well as every value between such minimum and maximum values. Furthermore, when a range refers to integers, it includes every integer between the minimum and maximum values. Moreover, when a plurality of ranges are provided to describe a feature or a characteristic, the plurality of ranges can be combined. In other words, unless otherwise indicated, all ranges disclosed herein should be understood to include any and all sub-ranges subsumed therein.

The inventors of the present disclosure have found that the solid-state electrolyte mainly includes oxides, sulfides, halides, polymers, etc. Among these, sulfide solid-state electrolytes have attracted wide attention due to their high ionic conductivity and good processability. In a liquid lithium-ion battery system, a liquid electrolyte can infiltrate an interior of the positive electrode, while in an all-solid-state battery, a solid-state electrolyte has no fluidity, so it is usually necessary to add a solid-state electrolyte material (about 15-25 wt%) and conductive carbon to the positive electrode. The addition of the solid-state electrolyte material may result in a low proportion of an active material in the positive electrode, reducing the energy density of the battery.

Therefore, based on the above problems, an embodiment of the present disclosure provides a secondary battery, including a positive electrode plate, where the positive electrode plate includes a positive electrode current collector, as well as a first positive electrode active material layer and a second positive electrode active material layer sequentially disposed on at least one surface of the positive electrode current collector, the first positive electrode active material layer includes a first additive, and the second positive electrode active material layer includes a second additive,
the first additive includes a compound represented by a general formula Liₓ₁Fe_{1-y1}M1_{y1}Cl_{4-z1}Se_{z1}, where 0 < x1 < 2.5, 0 < y1 < 0.3, 0.3 ≤ z1 < 0.5, and M1 includes at least one selected from the group consisting of Sc, B, Al, Ga, In, Zr, Si, Ge, Sn, V, Nb, Ta, Mo, and W, and
the second additive includes a compound represented by a general formula Liₓ₂Fe_{1-y2}M2_{y2}Cl_{4-z2}Se_{z2}, where 0 < x2 < 2.5, 0.3 ≤ y2 < 0.5, 0 < z2 < 0.3, and M2 includes at least one selected from the group consisting of Sc, B, Al, Ga, In, Zr, Si, Ge, Sn, V, Nb, Ta, Mo, and W.

In the present disclosure, a first positive electrode active material layer and a second positive electrode active material layer are creatively sequentially disposed on at least one surface of a positive electrode current collector, and a first additive (Liₓ₁Fe_{1-y1}M1_{y1}Cl_{4-z1}Se_{z1}) and a second additive (Liₓ₂Fe_{1-y2}M2_{y2}Cl_{4-z2}Se_{z2}) are added to the first positive electrode active material layer and the second positive electrode active material layer, respectively. By controlling the ranges of y1, z1, y2, and z2 in the first additive and the second additive, the first positive electrode active material layer close to the positive electrode current collector possesses a high electronic conductivity, and the second positive electrode active material layer away from the positive electrode current collector possesses a high ionic conductivity, which facilitates the transport of electrons and ions, and improves the ion and electron transport efficiency of the positive electrode plate. Meanwhile, the first additive and the second additive can serve as active materials, increasing the proportion of active materials in the first positive electrode active material layer and the second positive electrode active material layer, improving the conductivity and stability of the interface between the second positive electrode active material layer and the solid-state electrolyte, reducing the interface impedance therebetween, avoiding phenomena such as interface deterioration during cycling, and effectively improving the rate performance and cycling performance of the secondary battery.

In one embodiment of the present disclosure, 0.2 ≤ y1 < 0.3. For example, the y1 may be 0.2, 0.21, 0.22, 0.23, 0.24, 0.25, 0.26, 0.27, 0.28, 0.29, 0.295, 0.299, or a range consisting of any two values therein. Controlling the y1 within this range can further improve the electronic conductivity, increase the electron transport rate, and further improve the rate performance and cycling performance of the secondary battery.

In one embodiment of the present disclosure, 0.3 ≤ z1 ≤ 0.4. For example, the z1 may be 0.3, 0.31, 0.32, 0.33, 0.34, 0.35, 0.36, 0.37, 0.38, 0.39, 0.4, or a range consisting of any two values therein. Controlling the z1 within this range can further improve the electronic conductivity, increase the electron transport rate, and further improve the rate performance and cycling performance of the secondary battery.

In one embodiment of the present disclosure, 0.3 ≤ y2 ≤ 0.4. For example, the y2 may be 0.3, 0.31, 0.32, 0.33, 0.34, 0.35, 0.36, 0.37, 0.38, 0.39, 0.4, or a range consisting of any two values therein. Controlling the y2 within this range can further improve the ionic conductivity, increase the ion transport rate, improve the conductivity and stability of the interface between the second positive electrode active material layer and the solid-state electrolyte, reduce the interface impedance therebetween, and further improve the rate performance and cycling performance of the secondary battery.

In one embodiment of the present disclosure, 0.2 ≤ z2 < 0.3. For example, the z2 may be 0.2, 0.21, 0.22, 0.23, 0.24, 0.25, 0.26, 0.27, 0.28, 0.29, 0.295, 0.299, or a range consisting of any two values therein. Controlling the z2 within this range can further improve the ionic conductivity, increase the ion transport rate, improve the conductivity and stability of the interface between the second positive electrode active material layer and the solid-state electrolyte, reduce the interface impedance therebetween, and further improve the rate performance and cycling performance of the secondary battery.

In one embodiment of the present disclosure, the M1 includes at least one selected from the group consisting of Sc, Al, Zr, Si, Nb, Ta, and W.

In one embodiment of the present disclosure, the M2 includes at least one selected from the group consisting of Sc, Al, Zr, Si, Nb, Ta, and W.

When the M1 and the M2 are selected from the above elements, the ionic conductivity and electronic conductivity can be further improved, while the stability of the positive electrode plate can be enhanced, and the structure of the positive electrode plate is not easily damaged, avoiding negative effects on the crystal structure of the positive electrode active material. Additionally, side reactions of the solid-state electrolyte during battery charging and/or discharging are effectively reduced, the interface impedance is lowered, and the rate performance and cycling performance of the secondary battery are further improved.

In one embodiment of the present disclosure, an average particle size of the first additive is A1, an average particle size of the second additive is A2, and A1 < A2. Controlling the average particle sizes of the first additive and the second additive to satisfy this relationship can more effectively increase the transport rates of ions and electrons, and further improve the rate performance and cycling performance of the secondary battery.

In one embodiment of the present disclosure, 300 nm ≤ A1 ≤ 500 nm. For example, the A1 may be 300 nm, 320 nm, 350 nm, 360 nm, 380 nm, 400 nm, 420 nm, 450 nm, 460 nm, 480 nm, 500 nm, or a range consisting of any two values therein.

In one embodiment of the present disclosure, 500 nm ≤ A2 ≤ 800 nm. For example, the A2 may be 500 nm, 520 nm, 550 nm, 600 nm, 650 nm, 700 nm, 800 nm, or a range consisting of any two values therein.

In one embodiment of the present disclosure, a mass percentage of the first additive in the first positive electrode active material layer is B1, a mass percentage of the second additive in the second positive electrode active material layer is B2, and B2 < B1. Controlling B2 < B1 can provide more ion pathways and electron pathways, thereby promoting the transport of ions and electrons, improving the stability of the positive electrode plate, and further improving the rate performance and cycling performance of the secondary battery.

In one embodiment of the present disclosure, 20% ≤ B1 ≤ 24%. For example, the B1 may be 20%, 21%, 22%, 23%, 24%, or a range consisting of any two values therein.

In one embodiment of the present disclosure, 13% ≤ B2 ≤ 20%. For example, the B2 may be 13%, 14%, 15%, 16%, 17%, 18%, 19%, 20%, or a range consisting of any two values therein.

In one embodiment of the present disclosure, a thickness of the first positive electrode active material layer is in a range of from 80 µm to 100 µm. For example, the thickness of the first positive electrode active material layer may be 80 µm, 82 µm, 84 µm, 85 µm, 86 µm, 88 µm, 90 µm, 92 µm, 94 µm, 95 µm, 96 µm, 98 µm, 100 µm, or a range consisting of any two values therein.

In one embodiment of the present disclosure, a thickness of the second positive electrode active material layer is in a range of from 80 µm to 100 µm. For example, the thickness of the second positive electrode active material layer may be 80 µm, 82 µm, 84 µm, 85 µm, 86 µm, 88 µm, 90 µm, 92 µm, 94 µm, 95 µm, 96 µm, 98 µm, 100 µm, or a range consisting of any two values therein.

Controlling the thicknesses of the first positive electrode active material layer and the second positive electrode active material layer within these ranges can shorten the diffusion paths for ions and electrons, increase the transport rates of ions and electrons, improve the stability of the positive electrode plate, and further improve the rate performance and cycling performance of the secondary battery.

In one embodiment of the present disclosure, the first positive electrode active material layer includes a first positive electrode active material, and the first positive electrode active material includes at least one selected from the group consisting of lithium cobalt oxide and lithium nickel cobalt manganese oxide.

In one embodiment of the present disclosure, the second positive electrode active material layer includes a second positive electrode active material, and the second positive electrode active material includes at least one selected from the group consisting of lithium cobalt oxide and lithium nickel cobalt manganese oxide.

The lithium cobalt oxide includes a compound represented by Li₁₊ₓ₃Co_{1-y3}M3_{y3}O₂, where 0 ≤ x3 ≤ 0.1, 0 < y3 ≤ 0.1, and M3 includes at least one selected from the group consisting of Mg, Ni, Mn, Al, Ti, Ge, La, Ba, Zr, Y, V, W, Nb, Cu, B, Sr, Ga, Zn, Mo, Si, Sb, Ca, and Ta.

The lithium nickel cobalt manganese oxide includes a compound represented by Liₓ₄Ni_{y4}Co_{z4}MnₚM4_{q}O₂, where 0.8 ≤ x4 ≤ 1.2, 0.3 ≤ y4 < 1, 0 < z4 < 1, 0 < p < 1, 0 ≤ q ≤ 0.1, y4 + z4 + p + q = 1, and M4 includes at least one selected from the group consisting of Zr, Al, Mn, Zn, Cu, Cr, Mg, Fe, V, W, Y, Nb, Ti, In, La, Ce, Sr, Sb, and B.

In one embodiment of the present disclosure, a mass percentage of the first positive electrode active material in the first positive electrode active material layer is in a range of from 74% to 79%. For example, the mass percentage may be 74%, 75%, 76%, 77%, 78%, 79%, or a range consisting of any two of these values.

In one embodiment of the present disclosure, a mass percentage of the second positive electrode active material in the second positive electrode active material layer is in a range of from 78% to 86%. For example, the mass percentage may be 78%, 79%, 80%, 81%, 82%, 83%, 84%, 85%, 86%, or a range consisting of any two of these values.

In one embodiment of the present disclosure, the first positive electrode active material layer further includes a binder, and a mass percentage of the binder in the first positive electrode active material layer is in a range of from 1% to 2%, for example, the mass percentage may be 1%, 1.5%, 2%, or a range consisting of any two of these values.

In one embodiment of the present disclosure, the second positive electrode active material layer further includes a binder, and a mass percentage of the binder in the second positive electrode active material layer is in a range of from 1% to 2%, for example, the mass percentage may be 1%, 1.5%, 2%, or a range consisting of any two of these values.

In one embodiment of the present disclosure, the binder includes at least one selected from the group consisting of polyethylene, polypropylene, polyethylene terephthalate, polymethyl methacrylate, polyimide, aromatic polyamide, cellulose, nitrocellulose, styrene-butadiene rubber, nitrile butadiene rubber, fluororubber, isoprene rubber, polybutadiene rubber, ethylene-propylene rubber, styrene-butadiene-styrene block copolymer or a hydrogenated product thereof, ethylene-propylene-diene terpolymer, styrene-ethylene-butadiene-ethylene copolymer, styrene-isoprene-styrene block copolymer, syndiotactic-1,2-polybutadiene, polyvinyl acetate, ethylene-vinyl acetate copolymer, propylene-α-olefin copolymer, polyvinylidene fluoride, polytetrafluoroethylene, fluorinated polyvinylidene fluoride, and polytetrafluoroethylene-ethylene copolymer.

In one embodiment of the present disclosure, the binder includes at least one selected from the group consisting of polytetrafluoroethylene, styrene-butadiene rubber, nitrile butadiene rubber, polyvinylidene fluoride, polytetrafluoroethylene, polyethylene, and polypropylene.

In one embodiment of the present disclosure, the binder includes polytetrafluoroethylene (PTFE).

In the present disclosure, a material of the positive electrode current collector is not particularly limited, and any material known to be suitable as a positive electrode current collector can be used. In one embodiment of the present disclosure, the positive electrode current collector is made of a metal material, such as aluminum, stainless steel, nickel plating, titanium, and tantalum, or a carbon material such as a carbon cloth and a carbon paper. In one embodiment of the present disclosure, the positive electrode current collector is made of a metal material. In one embodiment of the present disclosure, the positive electrode current collector is made of aluminum.

A form of the positive electrode current collector is not particularly limited. If the positive electrode current collector is made of a metal material, the positive electrode current collector may be a metal foil, a metal cylinder, a metal strip coil, a metal plate, a metal foil, an expanded metal, a foamed metal, etc. If the positive electrode current collector is made of a carbon material, the positive electrode current collector may be made into, but is not limited to, a carbon plate, a carbon film, or a carbon cylinder.

In the present disclosure, a shape of the secondary battery is not particularly limited, which may be cylindrical, prismatic, or in any other shape.

In one embodiment of the present disclosure, the secondary battery further includes a negative electrode plate and a solid-state electrolyte disposed between the positive electrode plate and the negative electrode plate.

In one embodiment of the present disclosure, the solid-state electrolyte includes a sulfide solid-state electrolyte, and the sulfide solid-state electrolyte is represented by a general formula LiₓA_{y}B_{z}, where A includes at least one selected from the group consisting of Si, Ge, Sn, P, and S, B includes one or two of S and Cl, at least one of A and B includes S, 2 ≤ x ≤ 10, 1 ≤ y ≤ 5, and 0 ≤ z ≤ 12.

In one embodiment of the present disclosure, the sulfide solid-state electrolyte includes at least one selected from the group consisting of Li₆PS₅Cl, Li₆PS₅Br, Li₆PS₅I, Li₁₀GeP₂S₁₂, Li₂S-P₂S₅, LiSiPSCl, Li₇P₃S₁₁, Li_{5.5}PS_{4.5}Cl_{1.5}, and Li₁₀SnP₂S₁₂.

In one embodiment of the present disclosure, the negative electrode plate includes one or more selected from the group consisting of a lithium plate, an indium plate, and a LiIn alloy plate.

In some embodiments, the secondary battery may include an outer package, and the outer package may be used to encapsulate an electrode assembly and the solid-state electrolyte.

In some embodiments, the outer package of the secondary battery may be a hard case, such as a hard plastic case, an aluminum case, a steel case, etc. The outer package of the secondary battery may also be a pouch, such as a bag-type pouch. The pouch may be made of plastic, and as examples of plastic, polypropylene, polybutylene terephthalate, and polybutylene succinate can be listed.

An embodiment of the present disclosure provides an electrical device, including the secondary battery described above, and the secondary battery serves as a power supply for the electrical device.

Illustratively, the electrical device may include a mobile device (e.g., a mobile phone, a laptop computer, etc.), an electric vehicle (e.g., a battery electric vehicle, a hybrid electric vehicle, a plug-in hybrid electric vehicle, an electric bicycle, an electric scooter, an electric golf cart, an electric truck, etc.), an electric train, a ship, a satellite, an energy storage system, etc., but is not limited thereto.

The present disclosure is further described below with reference to specific examples.

### Example 1

A preparation method of a secondary battery included the following steps:

### (1) Preparation of an additive material

LiCl, FeCl₂, ZrCl₄, and Li₂Se were weighed according to a stoichiometric ratio of Li₂Fe_{0.8}Zr_{0.2}Cl_{3.6}Se_{0.4} and mixed to give a mixture, the mixture was ground in a high-energy ball mill at 500 rpm for 5 h and calcined under an Ar₂ atmosphere at 400°C for 5 h, then a calcined product was ground and sieved to an average particle size of 400 nm to obtain a first additive.

LiCl, FeCl₂, ZrCl₄, and Li₂Se were weighed according to a stoichiometric ratio of Li_{1.4}Fe_{0.6}Zr_{0.4}Cl_{3.8}Se_{0.2} and mixed to give a mixture, the mixture was ground in a high-energy ball mill at 500 rpm for 5 h and calcined under an Ar₂ atmosphere at 400°C for 5 h, then a calcined product was ground and sieved to an average particle size of 600 nm to obtain a second additive.

### (2) Preparation of a positive electrode plate

NCM811 (LiNi_{0.8}Co_{0.1}Mn_{0.1}O₂), the first additive, and PTFE were weighed in a weight ratio of 77:22:1 and mixed to give a mixture, and the mixture was ball-milled in a planetary ball mill at 200 rpm for 1 h and then rolled to obtain a dry-process positive electrode film. By controlling a roll gap width, a dry-process positive electrode film 1 with a thickness of 80 µm was obtained.

NCM811 (LiNi_{0.8}Co_{0.1}Mn_{0.1}O₂), the second additive, and PTFE were weighed in a weight ratio of 83:16:1 and mixed to give a mixture, and the mixture was ball-milled in a planetary ball mill at 200 rpm for 1 h and then rolled to obtain a dry-process positive electrode film. During the preparation, by controlling a roll gap width, a dry-process positive electrode film 2 with a thickness of 80 µm was obtained.

### (3) Assembly and testing of a secondary battery

100 mg of Li₆PS₅Cl electrolyte powder was added to a mold cell, and then pre-formed under a pressure of 30 MPa. Subsequently, the dry-process positive electrode film 2, the dry-process positive electrode film 1, and a 12 µm thick aluminum current collector were sequentially placed on one side of the electrolyte, a 80 µm thick indium plate and a 30 µm thick lithium plate were placed on the other side. Then, a pressure of 400 MPa was applied to complete the assembly of the secondary battery.

The parameters of the secondary battery of this example are shown in Table 1.

### Examples 2-7

Examples 2-7 differed from Example 1 in that the average particle sizes of the first additive and the second additive were changed by grinding and sieving. The parameters of the secondary batteries of Examples 2-7 are shown in Table 1.

### Examples 8-13

Examples 8-13 differed from Example 1 in that the mass percentage of the first additive in the first active material layer and/or the mass percentage of the second additive in the second active material layer were changed. The parameters of the secondary batteries of Examples 8-13 are shown in Table 1.

### Examples 14-23

Examples 14-17 differed from Example 1 in that the chemical formulas of the first additive and the second additive were changed.

Examples 18-23 differed from Example 1 in that the M1 and M2 elements were changed by replacing ZrCl₄ in Example 1 with corresponding metal chlorides, and the chemical formulas of the first additive and the second additive were changed by adjusting the addition amount of corresponding metal chlorides.

The parameters of the secondary batteries of Examples 14-23 are shown in Table 1.

### Comparative Example 1

Comparative Example 1 differed from Example 1 in the preparation of the positive electrode plate.

Preparation of a positive electrode plate: NCM811 (LiNi_{0.8}Co_{0.1}Mn_{0.1}O₂), Li₆PS₅Cl, and PTFE were weighed in a weight ratio of 77:22:1 and mixed to give a mixture, and the mixture was ball-milled in a planetary ball mill at 200 rpm for 1 h and then rolled to obtain a dry-process positive electrode film. By controlling a roll gap width, a dry-process positive electrode film with a thickness of 80 µm was obtained.

NCM811 (LiNi_{0.8}Co_{0.1}Mn_{0.1}O₂), Li₆PS₅Cl, and PTFE were weighed in a weight ratio of 83:16:1 and mixed to give a mixture, and the mixture was ball-milled in a planetary ball mill at 200 rpm for 1 h and then rolled to obtain a dry-process positive electrode film. By controlling a roll gap width, a dry-process positive electrode film 2 with a thickness of 80 µm was obtained.

### Comparative Example 2

Comparative Example 2 differed from Example 1 in that an equal amount of Li₂FeCl₄ was used in Comparative Example 2 to replace the first additive and the second additive in Example 1.

The preparation of Li₂FeCl₄: LiCl and FeCl₃ were weighed according to a stoichiometric ratio of Li₂FeCl₄ and mixed to give a mixture, then the mixture was ground in a high-energy ball mill at 500 rpm for 5 h. Finally, resulting powder was calcined under an Ar₂ atmosphere at 400°C for 5 h, then a calcined product was ground and sieved to an average particle size of 400 nm.

### Comparative Example 3

Comparative Example 3 differed from Example 1 in the preparation of the positive electrode plate.

Preparation of a positive electrode plate: NCM811 (LiNi_{0.8}Co_{0.1}Mn_{0.1}O₂), the first additive, and PTFE were weighed in a weight ratio of 77:22:1 and mixed to give a mixture, and the mixture was milled in a planetary ball mill at 200 rpm for 1 h, and then rolled to obtain a dry-process positive electrode film. By controlling a roll gap width, a dry-process positive electrode film 1 with a thickness of 80 µm was obtained.

NCM811 (LiNi_{0.8}Co_{0.1}Mn_{0.1}O₂), the first additive, and PTFE were weighed in a weight ratio of 83:16:1 and mixed to give a mixture, and the mixture was ball-milled in a planetary ball mill at 200 rpm for 1 h, and then rolled to obtain a dry-process positive electrode film. By controlling a roll gap width, a dry-process positive electrode film 2 with a thickness of 80 µm was obtained.

### Comparative Example 4

Comparative Example 4 differed from Example 1 in the preparation of the positive electrode plate.

Preparation of a positive electrode plate: NCM811 (LiNi_{0.8}Co_{0.1}Mn_{0.1}O₂), the second additive, and PTFE were weighed in a weight ratio of 77:22:1 and mixed to give a mixture, and the mixture was ball-milled in a planetary ball mill at 200 rpm for 1 h, and then rolled to obtain a dry-process positive electrode film. By controlling a roll gap width, a dry-process positive electrode film 1 with a thickness of 80 µm was obtained.

NCM811 (LiNi_{0.8}Co_{0.1}Mn_{0.1}O₂), the second additive, and PTFE were weighed in a weight ratio of 83:16:1 and mixed to give a mixture, and the mixture was ball-milled in a planetary ball mill at 200 rpm for 1 h, and then rolled to obtain a dry-process positive electrode film. By controlling a roll gap width, a dry-process positive electrode film 2 with a thickness of 80 µm was obtained.

**Table 1 Parameter table**

| | The first additive | A1/nm | B1/% | The second additive | A2/nm | B2/% |
|---|---|---|---|---|---|---|
| Example 1 | Li₂Fe_{0.8}Zr_{0.2}Cl_{3.6}Se_{0.4} | 400 | 22 | Li_{1.4}Fe_{0.6}Zr_{0.4}Cl_{3.8}Se_{0.2} | 600 | 16 |
| Example 2 | Li₂Fe_{0.8}Zr_{0.2}Cl_{3.6}Se_{0.4} | 300 | 22 | Li_{1.4}Fe_{0.6}Zr_{0.4}Cl_{3.8}Se_{0.2} | 500 | 16 |
| Example 3 | Li₂Fe_{0.8}Zr_{0.2}Cl_{3.6}Se_{0.4} | 500 | 22 | Li_{1.4}Fe_{0.6}Zr_{0.4}Cl_{3.8}Se_{0.2} | 800 | 16 |
| Example 4 | Li₂Fe_{0.8}Zr_{0.2}Cl_{3.6}Se_{0.4} | 400 | 22 | Li_{1.4}Fe_{0.6}Zr_{0.4}Cl_{3.8}Se_{0.2} | 400 | 16 |
| Example 5 | Li₂Fe_{0.8}Zr_{0.2}Cl_{3.6}Se_{0.4} | 400 | 22 | Li_{1.4}Fe_{0.6}Zr_{0.4}Cl_{3.8}Se_{0.2} | 300 | 16 |
| Example 6 | Li₂Fe_{0.8}Zr_{0.2}Cl_{3.6}Se_{0.4} | 200 | 22 | Li_{1.4}Fe_{0.6}Zr_{0.4}Cl_{3.8}Se_{0.2} | 300 | 16 |
| Example 7 | Li₂Fe_{0.8}Zr_{0.2}Cl_{3.6}Se_{0.4} | 600 | 22 | Li_{1.4}Fe_{0.6}Zr_{0.4}Cl_{3.8}Se_{0.2} | 900 | 16 |
| Example 8 | Li₂Fe_{0.8}Zr_{0.2}Cl_{3.6}Se_{0.4} | 400 | 20 | Li_{1.4}Fe_{0.6}Zr_{0.4}Cl_{3.8}Se_{0.2} | 600 | 13 |
| Example 9 | Li₂Fe_{0.8}Zr_{0.2}Cl_{3.6}Se_{0.4} | 400 | 24 | Li_{1.4}Fe_{0.6}Zr_{0.4}Cl_{3.8}Se_{0.2} | 600 | 20 |
| Example 10 | Li₂Fe_{0.8}Zr_{0.2}Cl_{3.6}Se_{0.4} | 400 | 20 | Li_{1.4}Fe_{0.6}Zr_{0.4}Cl_{3.8}Se_{0.2} | 600 | 20 |
| Example 11 | Li₂Fe_{0.8}Zr_{0.2}Cl_{3.6}Se_{0.4} | 400 | 20 | Li_{1.4}Fe_{0.6}Zr_{0.4}Cl_{3.8}Se_{0.2} | 600 | 24 |
| Example 12 | Li₂Fe_{0.8}Zr_{0.2}Cl_{3.6}Se_{0.4} | 400 | 18 | Li_{1.4}Fe_{0.6}Zr_{0.4}Cl_{3.8}Se_{0.2} | 600 | 12 |
| Example 13 | Li₂Fe_{0.8}Zr_{0.2}Cl_{3.6}Se_{0.4} | 400 | 26 | Li_{1.4}Fe_{0.6}Zr_{0.4}Cl_{3.8}Se_{0.2} | 600 | 24 |
| Example 14 | Li_{1.9}Fe_{0.8}Zr_{0.2}Cl_{3.7}Se_{0.3} | 400 | 22 | Li_{1.49}Fe_{0.6}Zr_{0.4}Cl_{3.71}Se_{0.29} | 600 | 16 |
| Example 15 | Li_{2.1}Fe_{0.8}Zr_{0.2}Cl_{3.5}Se_{0.5} | 400 | 22 | Li_{1.21}Fe_{0.6}Zr_{0.4}Cl_{3.99}Se_{0.01} | 600 | 16 |
| Example 16 | Li_{1.82}Fe_{0.71}Zr_{0.29}Cl_{3.6}Se_{0.4} | 400 | 22 | Li_{1.6}Fe_{0.7}Zr_{0.3}Cl_{3.8}Se_{0.2} | 600 | 16 |
| Example 17 | Li_{2.34}Fe_{0.97}Zr_{0.03}Cl_{3.6}Se_{0.4} | 400 | 22 | Li_{1.2}Fe_{0.5}Zr_{0.5}Cl_{3.8}Se_{0.2} | 600 | 16 |
| Example 18 | Li_{2.2}Fe_{0.8}S_{C0.2}Cl_{3.6}Se_{0.4} | 400 | 22 | Li_{1.8}Fe_{0.6}S_{C0.4}Cl_{3.8}Se_{0.2} | 600 | 16 |
| Example 19 | Li_{2.2}Fe_{0.8}Al_{0.2}Cl_{3.6}Se_{0.4} | 400 | 22 | Li_{1.8}Fe_{0.6}Al_{0.4}Cl_{3.8}Se_{0.2} | 600 | 16 |
| Example 20 | Li_{2.2}Fe_{0.8}B_{0.2}Cl_{3.6}Se_{0.4} | 400 | 22 | Li_{1.8}Fe_{0.6}B_{0.4}Cl_{3.8}Se_{0.2} | 600 | 16 |
| Example 21 | Li_{2.2}Fe_{0.8}In_{0.2}Cl_{3.6}Se_{0.4} | 400 | 22 | Li_{1.8}Fe_{0.6}In_{0.4}Cl_{3.8}Se_{0.2} | 600 | 16 |
| Example 22 | Li_{1.8}Fe_{0.8}Ta_{0.2}Cl_{3.6}Se_{0.4} | 400 | 22 | Li₁Fe_{0.6}Ta_{0.4}Cl_{3.8}Se_{0.2} | 600 | 16 |
| Example 23 | Li_{1.6}Fe_{0.8}W_{0.2}Cl_{3.6}Se_{0.4} | 400 | 22 | Li_{0.6}Fe_{0.6}W_{0.4}Cl_{3.8}Se_{0.2} | 600 | 16 |

### Performance Tests

Specific capacity of the positive electrode plate: The secondary battery was tested in a BTS-9000 Neware battery tester. The secondary battery was charged and discharged at 0.1C with a cut-off voltage of 1.9V to 3.7 V. The specific capacity of the positive electrode plate was calculated as the discharge capacity of the battery divided by a sum of masses of all materials in the positive electrode.

Cycling performance: The secondary battery was tested in a BTS-9000 Neware battery tester with a cut-off voltage of 1.9 V to 3.7 V. The secondary battery was first cycled at 0.1C for three cycles, then cycled at 0.5C for 100 cycles.

The test results are shown in Table 2.

**Table 2 Performance test results**

| | Specific capacity of the positive electrode plate (mAh/g) | Capacity retention ratio (%) |
|---|---|---|
| Example 1 | 177 | 86% |
| Example 2 | 172 | 86% |
| Example 3 | 169 | 83% |
| Example 4 | 164 | 79% |
| Example 5 | 165 | 76% |
| Example 6 | 163 | 73% |
| Example 7 | 161 | 75% |
| Example 8 | 175 | 85% |
| Example 9 | 178 | 86% |
| Example 10 | 169 | 80% |
| Example 11 | 162 | 73% |
| Example 12 | 165 | 75% |
| Example 13 | 164 | 76% |
| Example 14 | 182 | 91% |
| Example 15 | 172 | 80% |
| Example 16 | 181 | 93% |
| Example 17 | 174 | 87% |
| Example 18 | 174 | 90% |
| Example 19 | 178 | 90% |
| Example 20 | 176 | 89% |
| Example 21 | 174 | 84% |
| Example 22 | 173 | 83% |
| Example 23 | 177 | 88% |
| Comparative Example 1 | 150 | 42% |
| Comparative Example 2 | 153 | 48% |
| Comparative Example 3 | 158 | 70% |
| Comparative Example 4 | 159 | 72% |

As can be seen from Table 2, in the present disclosure, by sequentially disposing a first positive electrode active material layer and a second positive electrode active material layer on at least one surface of a positive electrode current collector, respectively adding a first additive and a second additive to the first positive electrode active material layer and the second positive electrode active material layer, and controlling the ranges of y1, z1, y2, and z2 in the first additive and the second additive, the rate performance and cycling performance of the secondary battery can be effectively improved.

As can be seen by comparing Examples 1 to 5, controlling A1 < A2 can effectively increase the transport rates of ions and electrons, and can further improve the rate performance and cycling performance of the secondary battery.

As can be seen by comparing Examples 1-3 with Examples 6-7, controlling 300 nm ≤ A1 ≤ 500 nm and 500 nm ≤ A2 ≤ 800 nm can effectively increase the transport rates of ions and electrons, and can further improve the rate performance and cycling performance of the secondary battery.

As can be seen by comparing Examples 1, 8, 9 with Examples 10-11, controlling B2 < B1 can provide more ion pathways and electron pathways, thereby promoting the transport of ions and electrons, improving the stability of the positive electrode plate, and further improving the rate performance and cycling performance of the secondary battery.

As can be seen by comparing Examples 1, 8, 9 with Examples 12-13, controlling 20% ≤ B1 ≤ 24% and 13% ≤ B2 ≤ 20% can effectively increase the transport rates of ions and electrons, and can further improve the rate performance and cycling performance of the secondary battery.

As can be seen by comparing Example 1 with Examples 14-15, controlling 0.3 ≤ z1 ≤ 0.4 and 0.2 ≤ z2 < 0.3 can further improve the rate performance and cycling performance of the secondary battery.

As can be seen by comparing Example 1 with Examples 16-17, controlling 0.2 ≤ y1 < 0.3 and 0.3 ≤ y2 ≤ 0.4 can further improve the rate performance and cycling performance of the secondary battery.

As can be seen by comparing Example 1 with Examples 18-23, when M1 includes at least one selected from the group consisting of Sc, Al, Zr, Si, Nb, Ta, and W, and M2 includes at least one selected from the group consisting of Sc, Al, Zr, Si, Nb, Ta, and W, the rate performance and cycling performance of the secondary battery can be further improved.

Finally, it should be noted that the above examples are only intended to illustrate the technical solutions of the present disclosure, not to limit the protection scope of the present disclosure. Although the present disclosure has been described in detail with reference to the preferred examples, a person of ordinary skill in the art should understand that modifications or equivalent substitutions may be made to the technical solutions of the present disclosure without departing from the spirit and scope of the technical solutions of the present disclosure.

## Claims

1. A secondary battery, comprising a positive electrode plate, wherein the positive electrode plate comprises a positive electrode current collector, as well as a first positive electrode active material layer and a second positive electrode active material layer sequentially disposed on at least one surface of the positive electrode current collector, the first positive electrode active material layer comprises a first additive, and the second positive electrode active material layer comprises a second additive,
the first additive comprises a compound represented by a general formula Liₓ₁Fe_{1-y1}M1_{y1}Cl_{4-z1}Se_{z1}, wherein 0 < x1 < 2.5, 0 < y1 < 0.3, 0.3 ≤ z1 < 0.5, and M1 comprises at least one selected from the group consisting of Sc, B, Al, Ga, In, Zr, Si, Ge, Sn, V, Nb, Ta, Mo, and W, and
the second additive comprises a compound represented by a general formula Liₓ₂Fe_{1-y2}M2_{y2}Cl_{4-z2}Se_{z2}, wherein 0 < x2 < 2.5, 0.3 ≤ y2 < 0.5, 0 < z2 < 0.3, and M2 comprises at least one selected from the group consisting of Sc, B, Al, Ga, In, Zr, Si, Ge, Sn, V, Nb, Ta, Mo, and W.

2. The secondary battery of claim 1, wherein at least one of the following (1) to (4) is satisfied: $0.2 \leq y 1 < 0.3 ,$ $0.3 \leq z 1 \leq 0.4 ,$ $0.3 \leq y 2 \leq 0.4 ,$ $0.2 \leq z 2 < 0.3 .$

3. The secondary battery of claim 1, wherein the M1 comprises at least one selected from the group consisting of Sc, Al, Zr, Si, Nb, Ta, and W, and/or
the M2 comprises at least one selected from the group consisting of Sc, Al, Zr, Si, Nb, Ta, and W.

4. The secondary battery of claim 1, wherein an average particle size of the first additive is A1, an average particle size of the second additive is A2, and A1 < A2.

5. The secondary battery of claim 4, wherein 300 nm ≤ A1 ≤ 500 nm, and/or $500 nm \leq A 2 \leq 800 nm .$

6. The secondary battery of claim 1, wherein a mass percentage of the first additive in the first positive electrode active material layer is B1, a mass percentage of the second additive in the second positive electrode active material layer is B2, and B2 < B1.

7. The secondary battery of claim 6, wherein 20% ≤ B1 ≤ 24%, and/or $13 % \leq B 2 \leq 20 % .$

8. The secondary battery of claim 1, wherein a thickness of the first positive electrode active material layer is in a range of from 80 µm to 100 µm, and/or
a thickness of the second positive electrode active material layer is in a range of from 80 µm to 100 µm.

9. The secondary battery of claim 1, wherein the first positive electrode active material layer comprises a first positive electrode active material, and the first positive electrode active material comprises at least one selected from the group consisting of lithium cobalt oxide and lithium nickel cobalt manganese oxide, and/or
the second positive electrode active material layer comprises a second positive electrode active material, and the second positive electrode active material comprises at least one selected from the group consisting of lithium cobalt oxide and lithium nickel cobalt manganese oxide.

10. The secondary battery of claim 9, wherein the lithium cobalt oxide comprises a compound represented by Li₁₊ₓ₃Co_{1-y3}M3_{y3}O₂, wherein 0 ≤ x3 ≤ 0.1, 0 < y3 ≤ 0.1, and M3 comprises at least one selected from the group consisting of Mg, Ni, Mn, Al, Ti, Ge, La, Ba, Zr, Y, V, W, Nb, Cu, B, Sr, Ga, Zn, Mo, Si, Sb, Ca, and Ta.

11. The secondary battery of claim 9, wherein the lithium nickel cobalt manganese oxide comprises a compound represented by Liₓ₄Ni_{y4}Co_{z4}MnₚM4_{q}O₂, wherein 0.8 ≤ x4 ≤ 1.2, 0.3 ≤ y4 < 1, 0 < z4 < 1, 0 < p < 1, 0 ≤ q ≤ 0.1, y4 + z4 + p + q = 1, and M4 comprises at least one selected from the group consisting of Zr, Al, Mn, Zn, Cu, Cr, Mg, Fe, V, W, Y, Nb, Ti, In, La, Ce, Sr, Sb, and B.

12. The secondary battery of claim 9, wherein a mass percentage of the first positive electrode active material in the first positive electrode active material layer is in a range of from 74% to 79%.

13. The secondary battery of claim 9, wherein a mass percentage of the second positive electrode active material in the first positive electrode active material layer is in a range of from 78% to 86%.

14. The secondary battery of claim 1, wherein the first positive electrode active material layer further comprises a binder, and a mass percentage of the binder in the first positive electrode active material layer is in a range of from 1% to 2%.

15. The secondary battery of claim 1, wherein the second positive electrode active material layer further comprises a binder, and a mass percentage of the binder in the second positive electrode active material layer is in a range of from 1% to 2%.

16. The secondary battery of claim 14 or 15, wherein the binder comprises at least one selected from the group consisting of polyethylene, polypropylene, polyethylene terephthalate, polymethyl methacrylate, polyimide, aromatic polyamide, cellulose, nitrocellulose, styrene-butadiene rubber, nitrile butadiene rubber, fluororubber, isoprene rubber, polybutadiene rubber, ethylene-propylene rubber, styrene-butadiene-styrene block copolymer or a hydrogenated product thereof, ethylene-propylene-diene terpolymer, styrene-ethylene-butadiene-ethylene copolymer, styrene-isoprene-styrene block copolymer, syndiotactic-1,2-polybutadiene, polyvinyl acetate, ethylene-vinyl acetate copolymer, propylene-α-olefin copolymer, polyvinylidene fluoride, polytetrafluoroethylene, fluorinated polyvinylidene fluoride, and polytetrafluoroethylene-ethylene copolymer.

17. The secondary battery of claim 1, wherein the secondary battery further comprises a negative electrode plate and a solid-state electrolyte disposed between the positive electrode plate and the negative electrode plate.

18. The secondary battery of claim 17, wherein the solid-state electrolyte comprises a sulfide solid-state electrolyte, and the sulfide solid-state electrolyte is represented by a general formula LiₓA_{y}B_{z}, wherein A comprises at least one selected from the group consisting of Si, Ge, Sn, P, and S, B comprises one or two of S and Cl, at least one of A and B comprises S, 2 ≤ x ≤ 10, 1 ≤ y ≤ 5, and 0 ≤ z ≤ 12.

19. The secondary battery of claim 18, wherein the sulfide solid-state electrolyte comprises at least one selected from the group consisting of Li₆PS₅Cl, Li₆PS₅Br, Li₆PS₅I, Li₁₀GeP₂S₁₂, Li₂S-P₂S₅, LiSiPSCl, Li₇P₃S₁₁, Li_{5.5}PS_{4.5}Cl_{1.5}, and Li₁₀SnP₂S₁₂.

20. An electrical device, comprising the secondary battery of any one of claims 1 to 19, wherein the solid-state battery serves as a power supply for the electrical device.
